# EUROPÄISCHE PATENTSCHRIFT

(11) **EP 1 782 882 B1**
(45) Veröffentlichungstag und Bekanntmachung des Hinweises auf die Patenterteilung: **22.06.2011**
(21) Anmeldenummer: 05024063.9
(22) Anmeldetag: 04.11.2005
(51) Int. Cl.: B01F 15/00, A01C 3/00, B01F 7/00, B01F 7/16, B01F 13/00, B01F 15/02

(54) **Vorrichtung zum Rühren und Abpumpen von Gülle**
Device for stirring and pumping of manure
Dispositif d'agitation et de pompage de lisier

(43) Veröffentlichungstag der Anmeldung: 09.05.2007
(73) Patentinhaber: Brand Gülletechnik GmbH, 49176 Hilter (DE)
(72) Erfinder: Brand, Heinrich, 49176 Hilter-Eppendorf (DE); Brand, Benno, 49086 Osnabrück (DE)
(74) Vertreter: Brandt, Detlef

(56) Entgegenhaltungen:
- AT-B- 369 942
- CH-A- 406 716
- DE-A1- 1 528 766
- DE-A1- 1 653 762
- DE-A1- 3 223 476
- DE-B- 1 146 299
- DE-C- 445 954
- DE-C- 494 649
- GB-A- 1 062 193
- US-A- 4 416 549
- US-A- 4 555 063

## Beschreibung

Die Erfindung betrifft eine Rührvorrichtung für Gülle und andere Flüssigkeiten nach dem Oberbegriff des Patentanspruches 1.

Zum Zerkleinern fester Bestandteile in Gülle und ähnlichen, feste Bestandteile aufweisenden Flüssigkeiten sind Rührvorrichtungen in unterschiedlichen Ausfertigungen im Einsatz. Bekannte transportable Kleinrührwerke, wie sie zum Beispiel aus der DE 198 51 598 A1 oder der DE 198 41 783 A1 hervorgehen und für die Verwendung in Ställen als so genannte Spaltenmixer ebenso bekannt sind, wie "Zapfwellenmixer" die über den Behälterrand eines mit Gülle gefüllten Hochbehälters beziehungsweise unmittelbar in hierfür vorgesehene Erdgruben eingeführt werden können, weisen jedoch jeweils spezielle Nachteile auf. Die zuletzt erwähnten Zapfwellenmixer, wie beispielsweise aus der DE 34 32 851 C1 bekannt, sind mit herkömmlichen Traktoren koppelbar, wobei sich als problematisch herausgestellt hat, dass die an der Kupplung abnehmbare Leistung von ca. 200 PS nicht vollständig nutzbar ist und folglich nicht in eine adäquate Rührleistung umgesetzt werden kann, weil sich infolge des vorhandenen Hebelarmes eines derartigen Zapfwellenmixers infolge der Rotation der Rührflügel eine Kraftwirkung ergibt, die beispielsweise bei der Verwendung langer Mixerarme massive Konstruktionen erfordert und die Standsicherheit eines Traktors gefährden kann. Folglich ist ein derartiger Zapfwellenmixer lediglich mit verminderter Leistung betreibbar. Dies führt jedoch dazu, dass die Zeit zum Verrühren und zum Zerkleinern der Gülle erheblich länger wird als dies wünschenswert ist und teilweise auch unbefriedigende Rührergebnisse erzielt werden.

Gemein ist den bisher bekannten Rührvorrichtungen für Gülle und ähnliche Flüssigkeiten, dass sie zumindest eine Rotorwelle aufweisen und ein Antriebsaggregat zum Antrieb dieser Rotorwelle, wobei es von untergeordneter Bedeutung ist, ob das Antriebsaggregat unmittelbar oder lediglich mittelbar mit der Rotorwelle gekoppelt wird. Darüber hinaus sind zum Schutz des Rührflügels, der um eine Rotationsachse drehbar ausgeführt und mit der besagten Rotorwelle gekoppelt ist, Hauben im Einsatz, die die Rührflügel aufnehmen.

Um die aufgerührte Flüssigkeit in einen Tankwagen befördern zu können und somit ihren Abtransport zu ermöglichen, ist darüber hinaus eine zusätzliche Pumpe erforderlich. Diese wird nach dem Verrühren der Flüssigkeit in den entsprechenden Behälter eingeführt, um so die Flüssigkeit absaugen zu können. Dieser zusätzliche Arbeitsschritt ist umständlich und kostet wertvolle Zeit, was bisher am Markt befindliche Anlagen unrentabel macht. Zudem ergibt sich bei der Verwendung separater Pumpen ein zusätzlicher Transportaufwand.

Aus der DE 494649 C ist eine Rührvorrichtung für Gülle mit einer Rotorwelle, einem Antriebsaggregat zum Antrieb der Rotorwelle und einem um eine Rotationsachse drehbaren, in einer Haube aufgenommenen Rührflügelbekannt. Der Rührflügel ist endseitig mit der Rotorwelle gekoppelt. Die Rührvorrichtung weist ferner eine Abpumpeinrichtung auf. Darüber hinaus besteht bei dieser Lösung die Möglichkeit eine Spülung der Rührflügel beziehungsweise ein Rühren der Gülle zu erreichen, indem die Haube in Richtung der Rotorwelle angehoben wird, sodass damit die Rührflügel frei in dem zu verarbeitenden Medium rotieren. Diese Lösung ist insofern nachteilig, weil infolge der Auslegung der Haube ein Rühren und Abpumpen nicht bis in Ecken und Randbereiche von mit Gülle befüllten Behältern möglich ist. Ferner kann die abhebbare Haube eine Verletzungsgefahr für die Bedienperson darstellen.

Weiterhin geht aus der AT 369 942 B eine Rührvorrichtung für Gülle und andere Flüssigkeiten, mit einer Rotorwelle, einem Antriebsaggregat zum Antrieb der Rotorwelle und einem um eine Rotationsachse drehbaren Rührflügel hervor, der endseitig mit der Rotorwelle gekoppelt ist. Die Rührvorrichtung weist auch hier eine Abpumpeinrichtung auf. Die Haube verfügt über zwei, jeweils quer zu einer entlang der Rotationsachse des Rührflügels gedachten Ebene und einander entgegengesetzt gerichtete Ausströmöffnungen. Die Haube besteht aus zwei in Axialrichtung der Rotorwelle übereinander angeordneten Einzelteilen, von denen jedes jeweils eine Ausströmöffnung aufweist. In der AT 369 942 B ist offenbart, dass zwei Druckauslässe durch unabhängig voneinander zu betreibende Drosselorgane gesteuert werden. Einer der Druckauslässe (in der AT 369 942 B, Figur 1, der Druckauslass "R") gibt die angesaugte Flüssigkeit unmittelbar wieder ab. Es erfolgt hierüber also kein "Abpumpen", sondern lediglich ein "Verrühren". Zum Abpumpen dient ein weiterer Druckauslass (in der AT 369 942 B, Figur 1, der Druckauslass "S"). Nach der AT 369 942 B wird die Flüssigkeit folglich permanent verrührt und über nur einen Druckauslass abgepumpt. Bei dieser Lösung ist neben dem erhöhten Material- und Montageaufwand nachteilig, dass der Rührflügel nicht vollständig in der Haube aufgenommenen ist, sondern zum Teil frei in den Behälter herausragt, um gleichzeitig rühren und abpumpen zu können. Auch hier ist somit eine Verletzungsgefahr der mit der Rührvorrichtung arbeitenden Personen nicht auszuschließen.

Der Erfindung liegt die Aufgabe zugrunde, eine Rührvorrichtung für Gülle und andere Flüssigkeiten bereitzustellen, die multivalent einsetzbar ist und neben dem durch Rühren erforderlichen Aufbereiten der Flüssigkeit ein Abpumpen mit optimalen Ergebnissen und minimalem Zeit- und Materialaufwand ermöglicht.

Gelöst wird diese Aufgabenstellung mit den Merkmalen des Patentanspruches 1. Weitere Ausgestaltungen der Erfindung sind in den sich anschließenden Unteransprüchen wiedergegeben.

Eine erfindungsgemäße Rührvorrichtung für Gülle und andere Flüssigkeiten verfügt über mindestens eine Rotorwelle, ein Antriebsaggregat zum Antrieb der Rotorwelle und wenigstens einen um eine Rotationsachse drehbaren, in einer Haube aufgenommenen Rührflügel, der endseitig mit der Rotorwelle gekoppelt ist. Die Haube weist wenigstens zwei, jeweils quer zu einer entlang der Rotationsachse des Rührflügels gedachten Ebene und einander entgegengesetzt gerichtete Ausströmöffnungen auf. Dies hat den Vorteil, dass die aus den Ausströmöffnungen der Haube austretende, verrührte Flüssigkeit an zwei einander entgegen gesetzten Seiten der Haube austritt und sich damit eine Aufhebung der auf die Haube wirkenden Kräfte ergibt. Folglich ist bei derartig gestalteten Rührvorrichtungen nahezu keine Eigenbewegung der Rührvorrichtung zu verzeichnen, sodass die Belastung der angrenzenden Bauteile minimal ist und beispielsweise beim Einsatz der Rührvorrichtung als Zapfwellenmixer zur Kopplung mit einem Traktor die gesamte am Traktor zur Verfügung stehende Leistung in eine Rührleistung umsetzbar ist.

Es wird ferner vorgeschlagen, dass die Rührvorrichtung neben diesen Rührorganen zumindest eine Abpumpeinrichtung aufweist. Dabei weist erfindungsgemäß jede Ausströmöffnung eine Abpumpeinrichtung mit einem zugeordneten Schieber auf, der mit jeweils einem Abführelement gekoppelt ist.

Als Abführelemente sind Abpumpschläuche. Abpumprohre oder äquivalente Mittel einsetzbar Durch die Verwendung eines Schiebers kann in einfacher Weise zwischen dem Rührbetrieb der Rührvorrichtung und dem Abpumpbetrieb umgeschaltet werden. Dies lässt sich beispielsweise realisieren, indem der Schieber in zwei Abschnitte unterteilt ist, die wechselnd vor die Ausströmöffnung geführt werden. Somit wird in einer ersten Stellung des Schiebers die Flüssigkeit verrührt und wie bei herkömmlichen Ruhrvorrichtungen an die Umgebung abgegeben, während in einer zweiten Stellung des Schiebers das beschriebene Abpumpen des verflüssigten Mediums über ein Abpumpelement erfolgt. Dabei wird der durch die Rührflügel erzeugte Druck genutzt. Die Rührflügel wirken somit wie eine Pumpe. Dieser Wechsel zwischen Rühren und Abpumpen kann beliebig oft erfolgen. Als Abpumpeinrichtung ist dabei nicht eine separate, zusätzlich mit Energie zu versorgende Pumpe anzusehen, sondern vielmehr stellt die Abpumpeinrichtung einen Teil der Rührvorrichtung selbst dar, der beispielsweise durch ein Umschalten zwischen Rühren und Abpumpen aktivierbar ist. Vorzugsweise befindet sich die Abpumpeinrichtung deshalb in unmittelbarer Nähe des Rührflügels. Damit kann bedarfsgerecht und beliebig oft ein Wechsel zwischen den Arbeitsgängen "Rühren" und "Abpumpen" erfolgen, ohne dass eine zusätzliche Pumpe erforderlich wird.

Damit ergeben sich für die hier dargestellte Lösung erhebliche Gewichtsvorteile. Zudem ist der Transport des erfindungsgemäßen Rührwerkes einfach, weil insgesamt ein erheblich vereinfachter Aufbau erreicht wurde.

Wie sich gezeigt hat, resultieren aus der Anwendung der Erfindung beispielgebende Reduzierungen der für das Aufrühren der Flüssigkeiten erforderlichen Rührzeiten. Es kann in einer sehr kurzen Zeiteinheit die Flüssigkeit verrührt und ohne Umbauten oder andere Zeitverluste unmittelbar abgepumpt werden. Auf den heute zum Teil noch anzutreffenden Einsatz von Chemikalien, wie sie teilweise zur Verflüssigung von Gülle eingesetzt werden, kann gänzlich verzichtet werden. Infolge des verhältnismäßig geringen Gewichtes der erfindungsgemäßen Rührvorrichtung ist es nicht mehr erforderlich, Absauganlagen und/oder Pumpen auf den Transport- und/oder Tankfahrzeugen mitzuführen und diese voluminösen Aggregate beispielsweise über den Acker oder auf der Strasse zu transportieren.

Gemäß einer vorteilhaften Ausgestaltung der Erfindung kann die Haube in einem Gehäuse aufgenommen sein. Die Unterbringung der gesamten Haube innerhalb eines separaten Gehäuses hat den Vorteil, dass die Abpumpeinrichtung einfach zu montieren ist. Darüber hinaus erfahren sämtliche Bauteile durch die Verwendung eines zusätzlichen Gehäuses, das im Sinne einer Kapselung des unteren Bereiches der Rührvorrichtung anzusehen ist, einen Schutz gegenüber mechanischen Beschädigungen. Nicht zuletzt kann die Verletzungsgefahr der Personen reduziert werden, die mit der Rührvorrichtung arbeiten.

Bei Verwendung eines Gehäuses kann die Abpumpeinrichtung entweder mit der Haube und/oder dem Gehäuse gekoppeit beziehungsweise integraler Bestandteil der Haube oder des Gehäuses sein. Demnach ist es also möglich, die Abpumpeinrichtung unmittelbar an der Haube anzubringen oder sie an dem Gehäuse zu befestigen. Im Zuge einer Vereinfachung der Fertigung der Rührvorrichtung ist es darüber hinaus sinnvoll, möglichst zahlreiche Bauteile aus einem Stück herzustellen, sie somit als "integrale" Bestandteile auszuführen. Damit ergeben sich neben erheblichen fertigungstechnischen Vorteilen natürlich auch Kostenreduzierungen bei der Herstellung.

Um ein Umschalten vom Rührbetrieb zum Pumpbetrieb zu ermöglichen, ist es von erheblichem Vorteil, wenn die Abpumpeinrichtung im Bedarfsfall vor die jeweilige Ausströmöffnung der Haube verbracht werden kann. Folglich sollte die Abpumpeinrichtung erfindungsgemäß insgesamt verschiebbar beziehungsweise bewegbar ausgeführt sein.

Um die Bewegbarkeit oder Verschiebbarkeit der Abpumpeinrichtung zu gewährleisten, lässt sich in sinnvoller Weise ein Stellglied verwenden, mittels dessen die Abpumpeinrichtung bewegbar an der Haube und/oder dem Gehäuse befestigt ist. Als Stellglieder können einfache Hebelmechaniken verwendet werden. Aber es ist auch möglich, beispielsweise ein pneumatisch, elektrisch, elektromagnetisch, elektromotorisch oder hydraulisch wirkendes Stellglied einzusetzen. Ferner sind selbstverständlich Kombinationen aus unterschiedlichen Mechanismen oder Wirkprinzipien der vorgenannten Art sinnvoll anwendbar.

Wie eingangs bereits erwähnt wurde, ist es von Vorteil, wenn die Haube mit Ausströmöffnungen versehen ist, die bezogen auf den Haubenumfang an einander entgegengesetzten Positionen der Haube vorgesehen sind, weil dadurch eine Neutralisierung der Kraftwirkungen erreicht werden kann, die durch die aus den Ausströmöffnungen ausströmenden Flüssigkeiten hervorgerufen werden.

Ebenso wie zwei einander gegenüberliegend angeordnete Ausströmöffnungen können gemäß einer Ausgestaltung der Erfindung entlang des Umfanges der Haube auch mehrere Ausströmöffnungen verteilt angeordnet werden. Von Bedeutung ist dabei lediglich, dass eine Aufhebung der sich infolge des Ausströmens der Flüssigkeiten ergebenden Kraftwirkungen erfolgt. Dementsprechend sollte eine symmetrische Anzahl von Ausströmöffnungen bevorzugt werden, sodass jeweils wenigstens zwei

Öffnungen einander gegenüberliegend, jedoch mit zueinander entgegengesetzter Ausströmrichtung vorhanden sind.

Um die erfindungsgemäße Lösung umsetzen zu können, ist dabei jeder Ausströmöffnung eine Abpumpeinrichtung zugeordnet. Somit lässt sich mit einer derart gestalteten Ausführung ein sehr effizientes Rühr- und Pumpergebnis erzielen, weil zeitgleich sowohl beim Rühren als auch beim Pumpen eine große Umfangsfläche abgedeckt wird.

Eine weitere Gestaltungsmöglichkeit ist auch darin zu sehen, dass die Haube zumindest einen im Querschnitt kreisförmigen Abschnitt ihrer Mantelfläche aufweist und die Ausströmrichtung wenigstens einer der Ausströmöffnungen der Haube zumindest teilweise radial oder tangential zu diesem kreisförmigen Abschnitt verläuft. Durch eine derartige strömungsoptimierte Gestaltung kann die zuvor beschriebene Kraftneutralisierung der Haube beziehungsweise des Gehäuses durch die einander gegenüberliegend angeordneten Ausströmöffnungen erzielt werden.

Um auch in schwer zugänglichen Behälterbereichen die dort vorhandene Flüssigkeit verrühren und abpumpen zu können, ist es darüber hinaus von Vorteil, wenn die Haube und/oder das Gehäuse schwenkbar beziehungsweise drehbar ausgeführt ist oder sind. Als Drehung der Haube beziehungsweise des Gehäuses wird dabei eine Rotation um die Rotationsachse, welche gleichzeitig die Rotationsachse der Rührflügel ist, verstanden, während die Haube und/oder das Gehäuse durch eine Schwenkbewegung in seiner Neigung verändert wird. Mit einer derartig gestalteten Rührvorrichtung lassen sich weitaus bessere Ergebnisse beim Verrühren und anschließendem Abpumpen erzielen als bei bekannten Lösungen, die oft den Nachteil mit sich brachten, dass in schwer zugänglichen Bereichen eines mit zu verrührender Flüssigkeit befüllten Behälters die Flüssigkeit nicht ordnungsgemäß und vollständig abgepumpt werden konnte.

Entsprechend einer Ausgestaltung dieses Erfindungsgedankens wird ferner vorgeschlagen, dass die Haube und/oder das Gehäuse mit einer Stelleinrichtung ausgestattet wird. Diese Stelleinrichtung ist geeignet, um die Haube und/oder das Gehäuse entsprechend zu verschwenken beziehungsweise zu drehen.

Als Stelleinrichtung kann eine der Verstellung der Haube und/oder des Gehäuses dienende Hebemechanik, Hydraulik, Pneumatik, oder ein elektromotorisch beziehungsweise elektromagnetischer Stellantrieb beziehungsweise eine Kombination aus mindestens zwei der vorgenannten Mechanismen oder Wirkprinzipien zur veränderbaren Festlegung der Haube und/oder des Gehäuses verstanden werden. Es ist erfindungsgemäß nicht maßgeblich, welcher der vorgenannten Mechanismen zum Einsatz kommt, da für unterschiedliche Zwecke auch verschiedene Wirkprinzipien nützlich sein können. Letztlich entscheidet sich die Frage ohnehin an den Kosten für ein derartiges Rührgerät, weil naturgemäß eine Hydraulik wesentlich aufwandiger und damit kostenintensiver sein wird als eine einfache Mechanik.

Für den Zweck einer längeren Verrührung beziehungsweise eines länger andauernden Abpumpens in einem bestimmten Bereich eines mit Flüssigkeit befüllten Behälters ist es sinnvoll, wenn die verstellbare Haube und/oder das verstellbare Gehäuse in einer bestimmten Position arretiert werden kann. Hierzu wird vorgeschlagen, dass die Stelleinrichtung eine Rastiervorrichtung zur veränderbaren Festlegung der Haube und/oder des Gehäuses aufweist. Unter Rastiervorrichtungen können sehr einfache mechanische Vorrichtungen verstanden werden, wie zum Beispiel Feder-Kugel-Rasten. Darüber hinaus ist es selbstverständlich möglich, aufwändigere Mechanismen vorzusehen, die eine veränderbare Positionierung der Haube und/oder des Gehäuses gestatten.

Um die rotierenden Bauteile, insbesondere die Rotorwelle, vor Beschädigungen zu schützen und darüber hinaus die Verletzungsgefahr für mit der Rührvorrichtung arbeitende Personen zu reduzieren, ist es entsprechend einer Weiterbildung der Erfindung möglich, die Rotorwelle in einem Mantelrohr unterzubringen. Dieses kann einen zylindrischen oder polygonalen Querschnitt aufweisen, wobei der Begriff "zylindrischer" Mantelumfang im Sinne des mathematischen Begriffes eines "Zylinders" zu verstehen ist und damit nicht auf den Spezialfall des Kreiszylinders beschränkt werden kann.

Da die erfindungsgemäße Rührvorrichtung nicht nur als Zapfwellenmixer, sondern auch als transportables Kleinrührwerk einsetzbar ist, kann diese entsprechend einer Ausgestaltung der Erfindung insgesamt transportabel ausgeführt werden und eine das Antriebsaggregat mit der den Rührflügel tragenden Rotorwelle höhenverstellbare Hubvorrichtung aufweisen. Mittels dieser Hubvorrichtung ist es beispielsweise möglich, die Rührflügel in Spalten zwischen Lattenrosten, wie sie in Ställen zum Einsatz kommen, einzuführen und damit die unterhalb der Lattenroste befindlichen Abflusskanäle durch die Rührvorrichtung aufzurühren beziehungsweise anschließend die aufgerührte Flüssigkeit abzupumpen.

Als Hubvorrichtung kann eine Seilwinde oder eine durch die Kraft einer Feder durch eine Hydraulik oder Pneumatik unterstützte Hubmechanik zum Einsatz kommen.

Die vereinfachte Transportmöglichkeit einer als transportables Kleinrührwerk ausgeführten Rührvorrichtung kann auch damit gewährleistet werden, dass diese in einem Gestell aufgenommen ist, das als Fahrgestell mit wenigstens zwei Rädern ausgebildet wird. Somit ist die erfindungsgemäße Rührvorrichtung einfach zu transportieren.

Die Transportierbarkeit der Rührvorrichtung ist jedoch nicht in jedem Fall umsetzbar oder gewünscht. So kann es ebenso sinnvoll sein, wenn die Rührvorrichtung zumindest teilweise Bestandteil eines die zu verrührende Flüssigkeit aufnehmenden Behälters ist. Das heißt mit anderen Worten, dass beispielsweise der gesamte Teil der Haube und/oder des Gehäuses sich innerhalb des Behälters befindet und über die in einem Mantelrohr geschützte Rotorwelle eine Verbindung zu dem außerhalb des Behälters an die Rotorwelle ankoppelbaren Antriebsaggregat aufweist. Eine derart stationäre Variante vereinfacht das Aufrühren und Abpumpen erheblich, weil keine Transportwege mehr erforderlich sind, um die Rührvorrichtung von einem zum nächsten Abpumport zu transportieren.

Eine bevorzugte Ausführungsform der erfindungsgemäßen Rührvorrichtung wird nachfolgend anhand der Zeichnung näher erläutert.

Es zeigen:
- Figur 1:: eine vereinfachte und im Schnitt gezeigte Ansicht eines Gehäuses der Rührvorrichtung in der Einstellung "Rühren",
- Figur 2:: eine schematisch stark vereinfachte Darstellung des Schnittver- laufes III-III aus Figur 1,
- Figur 3:: eine Darstellung der Rührvorrichtung mit Blick auf das Gehäuse in der Einstellung "Abpumpen",
- Figur 4:: den Schnittverlauf IV-IV aus Figur 3 in stark vereinfachter Ausführung,
- Figur 5:: eine erste Ansicht auf das Gehäuse einer erfindungsgemäßen Rührvorrichtung,
- Figur 6:: eine im Vergleich zu Figur 5 um 90° geschwenkte Ausführung es Gehäuses und
- Figur 7:: eine transportable Ausführung einer Rührvorrichtung nach der Erfindung.

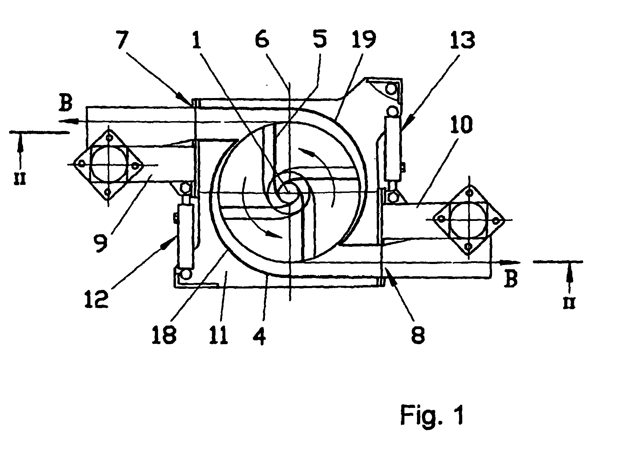

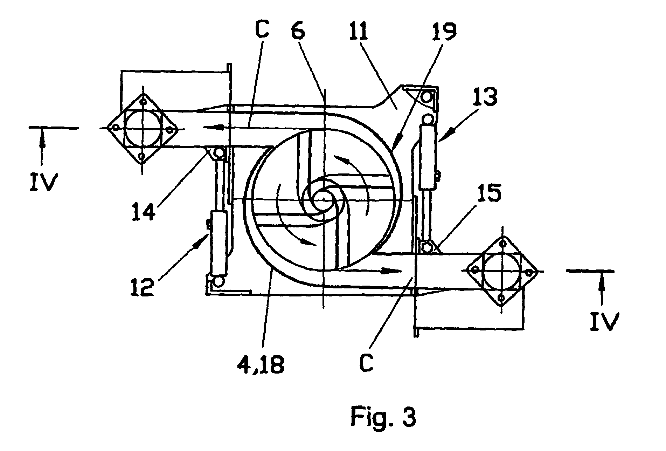

In der Figur 1 ist stark vereinfacht und im Teilschnitt der untere, gehäuseseitige Bereich einer erfindungsgemäßen Rührvorrichtung dargestellt. Der Blick in Richtung der Rotorwelle 1 wird auf das Gehäuse 11 gerichtet. Das Gehäuse 11 nimmt insgesamt die Haube 4 auf. Diese Haube 4 weist zwei kreisförmige Haubenabschnitte 18 und 19 auf, von denen ausgehend in annähernd tangentialer Richtung je ein Stutzen abgeht, an dessen Ende je eine Ausströmöffnung 7 beziehungsweise 8 vorhanden ist. Durch die tangentiale Ausrichtung der Stutzen sind die Ausströmöffnungen 7, 8 einander gegenüberliegend angeordnet. Dabei ist die Ausrichtung der Stutzen und damit die der Ausströmöffnungen 7 und 8 von einer gedachten Ebene 6 durch die Rotationsachse 3 rechtwinklig zu dieser Ebene. Die Strömungsrichtung der Flüssigkeit, die in den Figuren 1 und 3 verrührt wird, entspricht den Pfeilen "B" in den Figuren 1 und 3. Wie aus der Darstellung der Figur 1 entnehmbar ist, weist die Rührvorrichtung vier symmetrisch angeordnete Rührflügel 5 auf, welche innerhalb der Haube 4 und von dieser geschützt durch die Rotorwelle 1 angetrieben werden.

Die ihrerseits in einem Mantelrohr 20 aufgenommene Rotorwelle 1 ist mit einem Antriebsaggregat gekoppelt, welches aus der Figur 1 nicht hervorgeht. Durch die Rotation der Rotorwelle 1 und der daran befindlichen Rührflügel 5 wird die in einem Behälter befindliche, feste Bestandteile aufweisende Flüssigkeit verrührt und durch die Ausströmöffnungen 7 beziehungsweise 8 aus der Haube 4 herausbefördert.

An dem Gehäuse 11 sind jeweils im Bereich der Ausströmöffnungen 7 und 8 Steilglieder 12 beziehungsweise 13 vorhanden. Diese einerseits mit dem Gehäuse 11 gekoppelten, ansteuerbaren Stellglieder wirken mit ihrem gegenüberliegenden Ende auf einen Schieber 14 beziehungsweise 15 ein, wie dies in Figur 3 anschaulicher dargestellt ist. Die Stellglieder 12 und 13 sind als Hydraulikzylinder ausgeführt. Mittels dieser Hydraulikzylinder können sowohl Druck- als auch Zugkräfte übertragen werden. Soll nun ein Umschalten vom Rührbetrieb in den Pumpbetrieb erfolgen, werden die Stellglieder 12 und 13 angesteuert. Diese fahren aus und bewegen die Schieber 14, 15 derart, dass die Abpumpeinrichtung 9 und die Abpumpeinrichtung 10 vor die Ausströmöffnungen 7 beziehungsweise 8 verbracht werden.

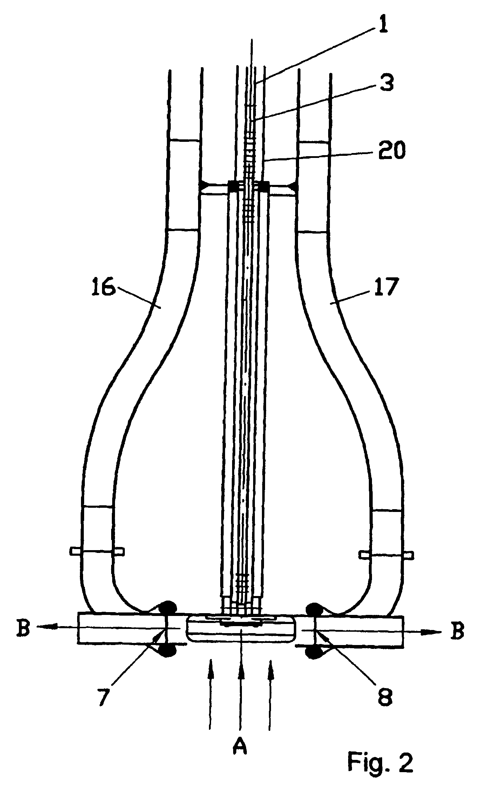

In der Figur 2 ist der Strömungsverlauf beim Verrühren der feste Bestandteile aufweisenden Flüssigkeit zu erkennen. In Richtung des mit A gekennzeichneten Pfeils wird die zu verrührende Flüssigkeit angesaugt und in Richtung der mit B gekennzeichneten Pfeile abgeführt.

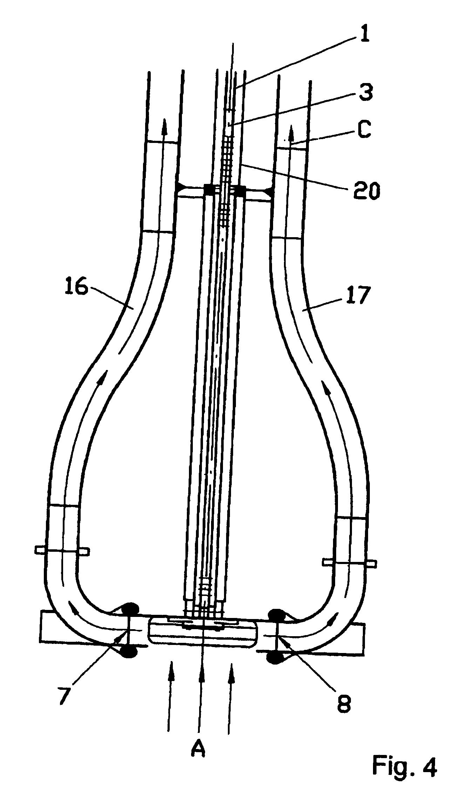

Die Figur 3 zeigt die Position der Stellglieder 12 und 13 sowie der Schieber 14 und 15 in der Position "Abpumpen". Die sich ergebende Strömungsrichtung der Flüssigkeit ist in der Figur 4 mit den Buchstaben C gekennzeichnet. Dabei wird die verrührte Flüssigkeit entlang der Ausströmöffnungen 7 und 8 der Haube 4 unmittelbar in je ein Abführelement 16 beziehungsweise 17 abgegeben, wie dies ebenfalls in Figur 4 dargestellt ist. Als Abführelement 16 beziehungsweise 17 wird hierbei ein Schlauch verwendet. Dieser leitet die Flüssigkeit unmittelbar in einen Tankbehälter und gibt sie dort ab.

Die erfindungsgemäße Rührvorrichtung wirkt damit nicht nur als Rührwerk, sondern auch als Pumpe, ohne dass es eines zusätzlichen Pumpenaggregates bedarf, wobei ein einfaches Umschalten vom Rührbetrieb in den Pumpbetrieb gewährleistet ist.

Die Figur 4 veranschaulicht die vereinfachte Darstellung des Pumpbetriebes, wie er bereits im Zusammenhang mit der Figur 3 beschrieben wurde. Hierbei wird die Flüssigkeit in Richtung der Pfeile A angesaugt und über die Ausströmöffnungen 7 und 8 der Haube 4 unmittelbar in die als Abführschläuche ausgeführten Abführelemente 16 und 17 verbracht, wo sie in Richtung der Pfeile C abgeführt werden kann. Die Rotorwelle 1 ist in einem Mantelrohr 20 schützend aufgenommen. Sie rotiert um die Rotationsachse 3, welche gleichsam die Rotationsachse für die Rührflügel 5 bildet.

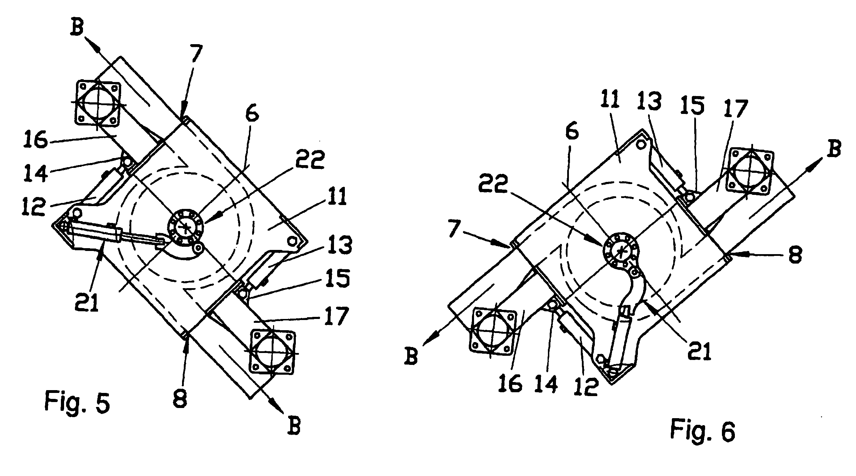

In den Figuren 5 und 6 ist das Gehäuse 11 in einer Draufsicht dargestellt, wobei hier zu erkennen ist, dass an dem Gehäuse 11 eine Stelleinrichtung 21 sowie eine Rastiervorrichtung 22 vorhanden ist. Die Stelleinrichtung 21 besteht aus einem Hydraulikzylinder, der unabhängig von den Stellgliedern 12 und 13 angesteuert werden kann und dazu dient, das gesamte Gehäuse 11 mit der darin aufgenommenen Haube 4 relativ zu dem feststehend angeordneten Mantelrohr 20 zu verstellen, das heißt, um die Rotationsachse 3 zu verdrehen. Das Gehäuse 11 in Figur 6 ist um etwa 90° zu der Darstellung in Figur 5 verdreht.

Ferner ist endseitig an der Stelleinrichtung 21 ein kreisbogenförmiger Hebel angebracht, der unmittelbar an der Rastiervorrichtung 22 angreift. Die Rastiervorrichtung besteht vorliegend aus einer einfachen Verbindung eines Pins mit einer Feder. Dieser Pin greift in die Bohrungen der Rastiervorrichtung 22 ein und legt damit das Gehäuse 11 in der jeweils gewünschten Position fest. Neben der hier gezeigten Verstellbarkeit von 90° sind selbstverständlich auch größere Verstellumfänge möglich.

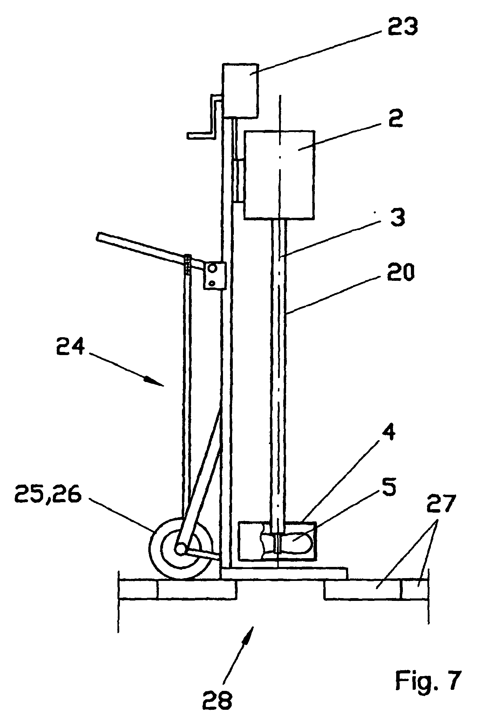

Zur Veranschaulichung einer mobilen Ausführung einer erfindungsgemäßen Rührvorrichtung ist in der Figur 7 eine transportable Rührvorrichtung gezeigt, die ein als Fahrgestell ausgebildetes Gestell 24 mit zwei Rädern 25, 26 aufweist. Diese transportable Rührvorrichtung ist beispielsweise in Tierställen einsetzbar, wo sie auf Lattenrosten 27 aufgestellt werden kann, um mittels der Hubvorrichtung 23 die Haube 4 und/oder das Gehäuse 11 durch einen zwischen den Lattenrosten 27 vorhandenen Spalt 28 in einen darunter befindlichen Güllekanal abzusenken. Hier kann die Gülle verrührt und in der zuvor beschriebenen Weise abgepumpt werden.

### Bezugszeichenliste:

- 1.: Rotorwelle
- 2.: Antriebsaggregat
- 3.: Rotationsachse
- 4.: Haube
- 5.: Rührflügel
- 6.: Ebene
- 7.: Ausströmöffnung
- 8.: Ausströmöffnung
- 9.: Abpumpeinrichtung
- 10.: Abpumpeinrichtung
- 11.: Gehäuse
- 12.: Stellglied
- 13.: Stellglied
- 14.: Schieber
- 15.: Schieber
- 16.: Abführelement
- 17.: Abführelement
- 18.: kreisförmiger Haubenabschnitt
- 19.: kreisförmiger Haubenabschnitt
- 20.: Mantelrohr
- 21.: Stelleinrichtung
- 22.: Rastiervorrichtung
- 23.: Hubvorrichtung
- 24.: Gestell
- 25.: Rad
- 26.: Rad
- 27.: Lattenroste
- 28.: Spalt
- A, B, C: Strömungsrichtungen

## Patentansprüche

1. Rührvorrichtung für Gülle und andere Flüssigkeiten, mit mindestens einer Rotorwelle (1), einem Antriebsaggregat (2) zum Antrieb der Rotorwelle (1) und wenigstens einem um eine Rotationsachse (3) drehbaren, in einer Haube (4) aufgenommenen Rührflügel (5), der endseitig mit der Rotorwelle (1) gekoppelt ist, wobei die Rührvorrichtung mit zumindest einer Abpumpeinrichtung (9, 10) ausgestattet ist und die Haube (4) wenigstens zwei, jeweils quer zu einer entlang der Rotationsachse (3) des Rührflügels (5) gedachten Ebene (6) und einander entgegengesetzt gerichtete Ausströmöffnungen (7, 8) aufweist,
**dadurch** gekenntzeichnet dass
jede Ausströmöffnung (7, 8) eine Abpumpeinrichtung (9, 10) mit einem zugeordneten Schieber (14, 15) und mindestens je einem Abführelement (16, 17) aufweist.

2. Rührvorrichtung nach Anspruch 1,
**dadurch gekennzeichnet, dass**
die Haube (4) in einem Gehäuse (11) aufgenommen ist.

3. Rührvorrichtung nach Anspruch 1 oder 2,
**dadurch gekennzeichnet, dass**
die Abpumpeinrichtungen (9, 10) mit der Haube (4) und/oder dem Gehäuse (11) gekoppelt oder integraler Bestandteil der Haube (4) beziehungsweise des Gehäuses (11) sind.

4. Rührvorrichtung nach einem der Ansprüche 2 bis 3,
**dadurch gekennzeichnet, dass**
die Abpumpeinrichtungen (9, 10) mittels wenigstens eines Stellgliedes (12, 13) bewegbar an der Haube (4) und/oder dem Gehäuse (11) befestigt sind.

5. Rührvorrichtung nach Anspruch 4,
**dadurch gekennzeichnet, dass**
das Stellglied (12, 13) eine Hebelmechanik, beziehungsweise ein pneumatisch, elektrisch, elektromagnetisch, elektromotorisch oder hydraulisch wirkendes Stellglied oder eine Kombination aus mindestens zwei dieser Mechanismen beziehungsweise Wirkprinzipien ist.

6. Rührvorrichtung nach einem der vorstehend genannten Ansprüche,
**dadurch gekennzeichnet, dass**
das Abführelement (16, 17) ein Abpumpschlauch oder Abpumprohr ist.

7. Rührvorrichtung nach einem der vorstehend genannten Ansprüche, **dadurch gekennzeichnet, dass**
die Haube (4) mehrere, gleichmäßig über ihre Umfangsmantelfläche verteilte Ausströmöffnungen (7, 8) aufweist.

8. Rührvorrichtung nach einem der vorstehend genannten Ansprüche,
**dadurch gekennzeichnet, dass**
die Haube (4) zumindest einen im Querschnitt kreisförmigen Abschnitt (18, 19) ihrer Mantelfläche aufweist und die Ausströmrichtung wenigstens einer der Ausströmöffnungen (7, 8) der Haube (4) zumindest teilweise radial oder tangential zu diesem kreisförmigen Abschnitt (18, 19) verlaufend angeordnet ist.

9. Rührvorrichtung nach einem der Ansprüche 2 bis 8,
**dadurch gekennzeichnet, dass** die Haube (4) und/oder das Gehäuse (11) schwenkbar beziehungsweise drehbar ausgeführt ist oder sind.

10. Rührvorrichtung nach Anspruch 9,
**dadurch gekennzeichnet, dass**
die Haube (4) und/oder das Gehäuse (11) mit einer Stelleinrichtung (21) verbunden ist.

11. Rührvorrichtung nach Anspruch 10,
**dadurch gekennzeichnet, dass**
die Stelleinrichtung (21) eine der Verstellung der Haube (4) und/oder des Gehäuses (11) dienende Hebelmechanik, Hydraulik, Pneumatik oder einen elektromotorischen beziehungsweise elektromagnetischen Stellantrieb oder eine Kombination aus mindestens zwei dieser Mechanismen beziehungsweise Wirkprinzipien zur veränderbaren Festlegung der Haube (4) und/oder des Gehäuses (11) aufweist.

12. Rührvorrichtung nach Anspruch 11,
**dadurch gekennzeichnet, dass**
die Stelleinrichtung (21) eine Rastiervorrichtung (22) zur veränderbaren Festlegung der Haube (4) und/oder des Gehäuses (11) aufweist.

13. Rührvorrichtung nach einem der vorstehend genannten Ansprüche
**dadurch gekennzeichnet, dass**
die Rotorwelle (1) in einem Mantelrohr (20) mit zylindrischem oder polygonalem Querschnitt aufgenommen ist.

14. Rührvorrichtung nach einem der vorhergehenden Ansprüche, **dadurch gekennzeichnet, dass**
die insgesamt transportable Rührvorrichtung eine das Antriebsaggregat (2) mit der den Rührflügel (5) tragenden Rotorwelle (1) höhenverstellbare Hubvorrichtung (23) aufweist.

15. Rührvorrichtung nach Anspruch 14,
**dadurch gekennzeichnet, dass**
die Hubvorrichtung (23) eine Seilwinde oder eine durch die Kraft einer Feder, durch eine Hydraulik oder durch eine Pneumatik unterstützte Hutmechanik ist.

16. Rührvorrichtung nach einem der vorstehend genannten Ansprüche,
**dadurch gekennzeichnet, dass**
die Rührvorrichtung in einem Gestell (24) aufgenommen ist, das als Fahrgestell mit wenigstens zwei Rädern (25, 26) ausgebildet ist.

17. Rührvorrichtung nach einem der vorstehend genannten Ansprüche,
**dadurch gekennzeichnet, dass**
das Antriebsaggregat (2) mit der Rotorwelle gekoppelt ist.

18. Rührvorrichtung nach einem der Ansprüche 1 bis 13 oder 17, **dadurch gekennzeichnet, dass**
die Rührvonichtung zumindest teilweise Bestandteil eines die zu verrührende Flüssigkeit aufnehmenden Behälters ist.

## Claims

1. Device for stirring liquid manure and other liquids, having at least one rotor shaft (1), a drive unit (2) for driving the rotor shaft (1) and at least one stirring blade (5) which can be rotated about a rotation axis (3) and which is received in a cover (4) and which is coupled to the rotor shaft (1) at the end side, the stirring device being provided with at least one pumping device (9, 10) and the cover (4) having at least two discharge openings (7, 8) which are directed transversely relative to a notional plane (6) along the rotation axis (3) of the stirring blade (5) and counter to each other,
**characterised in that**
each discharge opening (7, 8) has a pumping device (9, 10) having an associated sliding member (14, 15) and at least one discharge element (16, 17) in each case.

2. Stirring device according to claim 1,
**characterised in that**
the cover (4) is received in a housing (11).

3. Stirring device according to claim 1 or claim 2,
**characterised in that**
the pumping devices (9, 10) are connected to the cover (4) and/or the housing (11) or are an integral component of the cover (4) or the housing (11), respectively.

4. Stirring device according to either claim 2 or claim 3,
**characterised in that**
the pumping devices (9, 10) are movably secured to the cover (4) and/or the housing (11) by means of at least one adjustment member (12, 13).

5. Stirring device according to claim 4,
**characterised in that**
the adjustment member (12, 13) is a lever mechanism, or a pneumatically, electrically, electromagnetically, electromotively or hydraulically acting adjustment member or a combination of at least two of these mechanisms or operating principles.

6. Stirring device according to any one of the preceding claims,
**characterised in that**
the discharge element (16, 17) is a pumping hose or a pumping pipe.

7. Stirring device according to any one of the preceding claims,
**characterised in that**
the cover (4) has a plurality of discharge openings (7, 8) which are distributed in a uniform manner over the peripheral covering face thereof.

8. Stirring device according to any one of the preceding claims,
**characterised in that**
the cover (4) has at least one portion (18, 19) of the covering face thereof which is circular in cross-section and the discharge direction of at least one of the discharge openings (7, 8) of the cover (4) is arranged so as to at least partially extend radially or tangentially relative to this circular portion (18, 19).

9. Stirring device according to any one of claims 2 to 8,
**characterised in that**
the cover (4) and/or the housing (11) is/are constructed so as to be pivotable or rotatable.

10. Stirring device according to claim 9,
**characterised in that**
the cover (4) and/or the housing (11) is connected to an adjustment device (21).

11. Stirring device according to claim 10,
**characterised in that**
the adjustment device (21) has a lever mechanism, hydraulic mechanism, pneumatic mechanism or an electromotive or electromagnetic adjustment drive which serves to adjust the cover (4) and/or the housing (11) or a combination of at least two of these mechanisms or operating principles for adjustably securing the cover (4) and/or the housing (11).

12. Stirring device according to claim 11,
**characterised in that**
the adjustment device (21) has a locking device (22) for adjustably securing the cover (4) and/or the housing (11).

13. Stirring device according to any one of the preceding claims,
**characterised in that** the rotor shaft (1) is received in a covering pipe (20) with a cylindrical or polygonal cross-section.

14. Stirring device according to any one of the preceding claims,
**characterised in that**
the stirring device which is generally transportable has a lifting device (23) which can be adjusted in terms of height with the rotor shaft (1) which carries the stirring blade (5) by the drive unit (2).

15. Stirring device according to claim 14,
**characterised in that**
the lifting device (23) is a cable winch or a lifting mechanism which is supported by the force of a spring, a hydraulic mechanism or a pneumatic mechanism.

16. Stirring device according to any one of the preceding claims,
**characterised in that**
the stirring device is received in a frame (24) which is constructed as a travel frame having at least two wheels (25, 26).

17. Stirring device according to any one of the preceding claims,
**characterised in that**
the drive unit (2) is connected to the rotor shaft.

18. Stirring device according to any one of claims 1 to 13 or 17,
**characterised in that**
the stirring device is at least partially an integral component of a container which receives the liquid to be stirred.

## Revendications

1. Dispositif de brassage de lisier et d'autres liquides, comportant au moins un arbre rotor (1), un groupe d'entraînement (2), destiné à entraîner l'arbre rotor (1), et au moins une pale de brassage (5) pouvant tourner autour d'un axe de rotation (3), laquelle est logée dans un capot (4) et est couplée, au niveau de son extrémité, à l'arbre rotor (1), le dispositif de brassage étant équipé d'au moins un dispositif d'évacuation par pompage (9, 10) et le capot (4) présentant au moins deux orifices de sortie de flux (7, 8), orientés chacun dans le sens transversal par rapport à un plan (6) imaginaire le long de l'axe de rotation (3) de la pale de brassage (5) et orientés en sens inverse l'un par rapport à l'autre,
**caractérisé en ce que**
chaque orifice de sortie de flux (7, 8) présente un dispositif d'évacuation par pompage (9, 10) avec respectivement une vanne (14, 15) associée, et au moins un élément d'évacuation (16, 17).

2. Dispositif de brassage selon la revendication 1,
**caractérisé en ce que**
le capot (4) est logé dans un boîtier (11).

3. Dispositif de brassage selon la revendication 1 ou 2,
**caractérisé en ce que**
les dispositifs d'évacuation par pompage (9, 10) sont couplés au capot (4) et/ou au boîtier (11) ou sont une partie intégrale du capot (4) ou du boîtier (11).

4. Dispositif de brassage selon l'une quelconque des revendications 2 à 3, **caractérisé en ce que**
les dispositifs d'évacuation par pompage (9, 10) sont fixés de manière mobile sur le capot (4) et/ou le boîtier (11) par l'intermédiaire d'au moins un actionneur (12, 13).

5. Dispositif de brassage selon la revendication 4,
**caractérisé en ce que**
l'actionneur (12, 13) est un mécanisme à levier, c'est-à-dire un actionneur à effet pneumatique, électrique, électromagnétique, électromoteur ou hydraulique, ou une combinaison d'au moins deux de ces mécanismes ou principes d'action.

6. Dispositif de brassage selon l'une quelconque des revendications précédentes,
**caractérisé en ce que**
l'élément d'évacuation (16, 17) est un tuyau flexible d'évacuation par pompage ou un tube d'évacuation par pompage.

7. Dispositif de brassage selon l'une quelconque des revendications précédentes,
**caractérisé en ce que**
le capot (4) présente plusieurs orifices de sortie de flux (7, 8) répartis de manière homogène sur la surface périmétrique de son enveloppe.

8. Dispositif de brassage selon l'une quelconque des revendications précédentes,
**caractérisé en ce que**
le capot (4) présente, au niveau de la surface de son enveloppe, une section circulaire (18, 19), en coupe transversale au moins, et **en ce que** le sens de la sortie de flux d'au moins un des orifices de sortie de flux (7, 8) du capot (4) est orienté, au moins en partie, radialement ou tangentiellement par rapport à cette section circulaire (18, 19).

9. Dispositif de brassage selon l'une quelconque des revendications 2 à 8,
**caractérisé en ce que**
le capot (4) et/ou le boîtier (11) se présente ou se présentent sous une forme rotative ou pivotante.

10. Dispositif de brassage selon la revendication 9,
**caractérisé en ce que** le capot (4) et/ou le boîtier (11) est/ sont relié(s) à un dispositif de réglage (21).

11. Dispositif de brassage selon la revendication 10,
**caractérisé en ce que** le dispositif de réglage (21) présente, pour le réglage du capot (4) et/ou du boîtier (11), un mécanisme à levier, un système hydraulique, un système pneumatique ou un actionneur électromoteur ou électromagnétique ou une combinaison d'au moins deux de ces mécanismes ou principes d'action servant au positionnement variable du capot (4) et/ou du boîtier (11).

12. Dispositif de brassage selon la revendication 11,
**caractérisé en ce que**
le dispositif de réglage (21) comporte un dispositif de blocage par encliquetage (22) servant au positionnement variable du capot (4) et/ou du boîtier (11).

13. Dispositif de brassage selon l'une quelconque des revendications précédentes,
**caractérisé en ce que**
l'arbre rotor (1) est logé dans un tube fourreau (20) présentant une coupe transversale cylindrique ou polygonale.

14. Dispositif de brassage selon l'une quelconque des revendications précédentes,
**caractérisé en ce que**
le dispositif de brassage, transportable dans son ensemble, présente un dispositif de levage (23) réglant la hauteur du groupe d'entraînement (2) avec l'arbre rotor (1) supportant la pale de brassage (5).

15. Dispositif de brassage selon la revendication 14,
**caractérisé en ce que** le dispositif de levage (23) est un treuil à câble ou un mécanisme de levage renforcé d'une force de ressort, d'un système hydraulique ou d'un système pneumatique.

16. Dispositif de brassage selon l'une quelconque des revendications précédentes,
**caractérisé en ce que**
le dispositif de brassage est logé dans un châssis (24), qui se présente sous la forme d'un châssis de véhicule avec au moins deux roues (25, 26).

17. Dispositif de brassage selon l'une quelconque des revendications précédentes,
**caractérisé en ce que**
le groupe d'entraînement (2) est couplé à l'arbre rotor.

18. Dispositif de brassage selon l'une quelconque des revendications 1 à 13 ou 17,
**caractérisé en ce que**
le dispositif de brassage est au moins partiellement une partie intégrante d'un contenant destiné au receuil du liquide à brasser.
